# EUROPEAN PATENT APPLICATION

(11) **EP 4 685 908 A1**
(43) Date of publication of application: **28.01.2026**
(21) Application number: 25171667.6
(22) Date of filing: 22.04.2025
(51) Int. Cl.: H01M 10/0567

(54) **LITHIUM-ION BATTERY ELECTROLYTE, LITHIUM-ION BATTERY AND AN ELECTROCHEMICAL APPARATUS**

(30) Priority: 25.07.2024 CN 202411008908
(71) Applicant: AESC Japan Ltd., Yokohama-Shi, Kanagawa 220-0012 (JP)
(72) Inventor: YU, Le, Pudong New Area Shanghai, 201315 (CN); MA, Caiyu, Pudong New Area Shanghai, 201315 (CN)
(74) Representative: Becker, Eberhard

(57) **Abstract**

A lithium-ion battery electrolyte, a lithium-ion battery, and an electrochemical apparatus are provided. The electrolyte includes a non-aqueous solvent, a lithium salt, and an additive including a first additive and a second additive. The first additive is selected from compounds represented by formula (I), and the second additive is lithium bis(oxyalyl)difluorophosphate, and 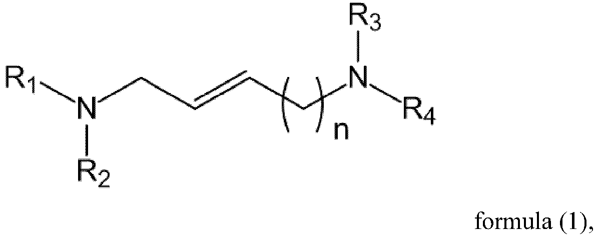 where R₁, R₂, R₃, and R₄ are each independently a substituent having 1 to 3 carbon atoms, 0 to 4 unsaturations, and 0 to 3 heteroatoms, the heteroatoms are selected from at least one of nitrogen, phosphorus, or sulfur, and n is 0 to 2.

## Description

### BACKGROUND

### Technical Field

The disclosure relates to the technical field of power batteries, and in particular, relates to a lithium-ion battery electrolyte, a lithium-ion battery, and an electrochemical apparatus.

### Description of Related Art

With the gradual depletion of fossil fuels and increasingly severe environmental pollution problems, the automotive industry is facing unprecedented challenges and urgently needs to find a new type of energy that is both environmentally friendly and efficient. Among many potential choices, lithium-ion batteries have become the focus of attention with their excellent performance and broad application prospects. Lithium-ion batteries exhibit the characteristics such as high energy density, low self-discharge rate, and high voltage, so a large amount of energy can be stored in a relatively small volume, a high level of charge can be maintained even when not in use for a long time, and powerful electrical output can be provided for vehicles.

Despite their outstanding performance, the safety issues of lithium-ion batteries cannot be ignored. During the charging and discharging process of lithium-ion batteries, due to the complexity of chemical reactions, a large amount of gas is generated inside the batteries. The accumulation of these gases can lead to battery volume swelling, which may cause misalignment of terminal sheets and separators, increase the risk of battery polarization, and trigger battery explosion or fire issues. Moreover, these problems are unpredictable during battery use, and once these problems occur, they will pose a great threat to people's lives and property safety. At present, commonly used electrolytes with lithium hexafluorophosphate as the lithium salt, combined with mixed organic solvents of cyclic and chain carbonates, produce serious gas generation. Further, their performance in high and low temperature environments is difficult to be comprehensively balanced, so their application range is limited.

### SUMMARY

The disclosure provides a lithium-ion battery electrolyte, a lithium-ion battery, and an electrochemical apparatus through which battery resistance is effectively reduced, low-temperature performance of the battery is improved, and high-temperature performance and gas generation performance are balanced.

To solve the above technical problems, the disclosure provides a lithium-ion battery electrolyte at least including the following components: a non-aqueous solvent, a lithium salt, and an additive.

The additive includes a first additive and a second additive. The first additive is selected from compounds represented by formula (I), the second additive is lithium bis(oxyalyl)difluorophosphate, and 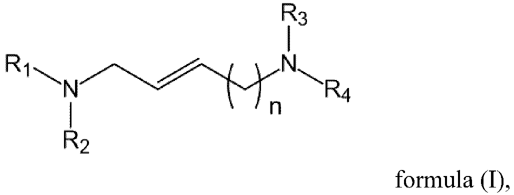 where R₁, R₂, R₃, and R₄ are each independently a substituent having 1 to 3 carbon atoms, 0 to 4 unsaturations, and 0 to 3 heteroatoms, the heteroatoms are selected from at least one of nitrogen, phosphorus, or sulfur, and n is 0 to 2.

In an embodiment of the disclosure, R₁, R₂, R₃, and R₄ are each independently a alkyl group, a alkenyl group, a alkynyl group, or an amino group.

In an embodiment of the disclosure, a content of the first additive in the electrolyte is 0.1wt% to 3wt%, and a content of the second additive in the electrolyte is 0.1wt% to 3wt%.

In an embodiment of the disclosure, a content of the first additive in the electrolyte is 0.1wt% to 0.5wt%, and a content of the second additive in the electrolyte is 0.5wt% to 1wt%. A mass ratio of the second additive to the first additive is 1.5:1 to 2:1.

In an embodiment of the disclosure, the first additive is selected from at least one of the following compounds:

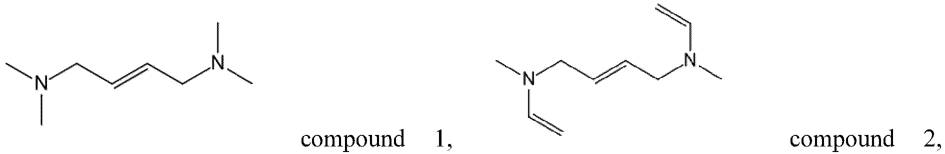

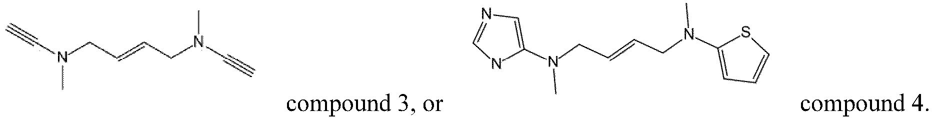

In an embodiment of the disclosure, the non-aqueous solvent is selected from at least one of carbonate esters, carboxylic acid esters, ethers, or nitriles. The carbonate esters are selected from at least one of ethylene carbonate, propylene carbonate, dimethyl carbonate, ethyl methyl carbonate, or diethyl carbonate. The carboxylic acid esters are selected from at least one of ethyl formate, ethyl acetate, n-propyl acetate, or ethyl propionate. The ethers are selected from at least one of 1,2-dimethoxyethane or ethylene glycol diethyl ether. The nitriles are selected from at least one of acetonitrile, propionitrile, butyronitrile, or pentanenitrile. A content of the non-aqueous solvent in the electrolyte is 70wt% to 85wt%.

In an embodiment of the disclosure, the lithium salt is selected from at least one of lithium hexafluorophosphate, lithium bis(fluorosulfonyl)imide, lithium bis(trifluoromethyl)sulfonylimide, lithium acetate, lithium methanesulfonate, and lithium trifluoromethanesulfonate. A content of the lithium salt in the electrolyte is 12wt% to 16wt%.

The disclosure further provides a lithium-ion battery at least including a positive terminal sheet, a negative terminal sheet, and an electrolyte.

The electrolyte is selected from the lithium-ion battery electrolyte according to the above.

In an embodiment of the disclosure, a positive active material on the positive terminal sheet includes Liₓ[Ni_{y}Co_{z}MnₜM_{(1-y-z-t})]O_{2-δ}, where M is at least one of Cr, Zr, Ca, Mg, Cu, Ti, Al, Mo, W, or Zn, 0.9<x<1.1, 0.65≤y<1.0, 0≤z<0.5, 0≤t<0.5, and 0≤δ≤0.1. A negative active material on the negative terminal sheet includes at least one of graphite, a silicon oxide material, or a silicon carbon material.

The disclosure further provides an electrochemical apparatus including the lithium-ion battery according to the above.

To sum up, the disclosure provides a lithium-ion battery electrolyte, a lithium-ion battery, and an electrochemical apparatus. Through the combined use of the first additive and lithium bis(oxyalyl)difluorophosphate as the second additive, the solubility of lithium bis(oxyalyl)difluorophosphate is improved through intermolecular interactions. The unsaturated bonds in the first additive can capture F- produced by P-F bond breaking, C-F covalent bonds are formed, and further chain addition reactions occur on the positive terminal side, so the stability of the positive terminal interface is improved. The H⁺ in the electrolyte is neutralized, the increase in electrolyte acidity is avoided, and the decomposition and gas generation of the non-aqueous solvent is reduced. Transition metal dissolution and structural collapse in the positive terminal are further prevented, and transition metal ions in the positive terminal are protected from HF corrosion. The combined use of the first additive and lithium bis(oxyalyl)difluorophosphate can fully exploit the advantages of both, so the quality of the cathode electrolyte inter phase and solid electrolyte interface is enhanced, the low-temperature resistance of the lithium-ion battery is effectively reduced, the low-temperature performance of the battery is improved, and high-temperature performance and gas generation performance are balanced.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be understood that the disclosure can be implemented in different forms and should not be interpreted as limited to the embodiments presented herein. On the contrary, providing these embodiments will make the disclosure thorough and complete and will fully convey the scope of the disclosure to a person having ordinary skill in the art.

The technical solution of the disclosure is further detailed in combination with the embodiment in the following paragraphs. Obviously, the described embodiments are only part of the embodiments of the disclosure, not all embodiments. Based on the embodiments of the disclosure, all other embodiments obtained by a person having ordinary skill in the art without making any inventive effort fall within the scope that the disclosure seeks to protect.

The disclosure provides a lithium-ion battery, which is, for example, a primary battery or a secondary battery. The secondary battery is, for example, a soft-pack battery, a square-casing battery, or a cylindrical battery. The disclosure does not specifically limit the type of lithium-ion battery. Herein, a cylindrical battery is taken as an example to illustrate the specific implementation of the disclosure. In an embodiment of the disclosure, the lithium-ion battery includes an outer casing and a bare cell disposed in the outer casing. The bare cell includes a positive terminal sheet, a separator, and a negative terminal sheet. The positive terminal sheet, the separator, and the negative terminal sheet are stacked sequentially to ensure that a separator is provided between any positive terminal sheet and negative terminal sheet. A multi-layered stack is obtained through winding, which is placed into the battery outer casing as a bare cell. Finally, an electrolyte is injected into the outer casing once or several times, so that the bare cell is completely immersed in the electrolyte.

The positive terminal sheet includes a positive current collector and a positive material layer coated on at least one side surface of the positive current collector. The positive current collector is, for example, a foil formed after surface treatment of nickel, titanium, aluminum, silver, stainless steel, or carbon, etc. In addition to foil, the positive current collector may also be used in any one or a combination of various forms such as film, mesh, porous, foam, or non-woven fabric. Herein, a thickness of the positive current collector is, for example, 8µm to 15µm. In this embodiment, the positive current collector is, for example, aluminum foil, and the thickness of the aluminum foil is, for example, 13µm.

The positive material layer includes a positive active material, a binder, and a conductive agent, etc. Herein, the positive active material may be selected from a nickel cobalt manganese ternary positive active material. The positive active material may be represented by the following chemical formula: Liₓ[Ni_{y}Co_{z}MnₜM_{(1-y-z-t})]O_{2-δ}, where M is selected from one or more of Cr, Zr, Ca, Mg, Cu, Ti, Al, Mo, W, or Zn, etc., 0.9<x<1.1, 0.65≤y<1.0, 0≤z<0.5, 0≤t<0.5, and 0≤δ≤0.1. The binder is selected from any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene propylene diene monomer (EPDM), polyhexafluoropropylene, polymerized styrene butadiene rubber (SBR), etc. The conductive agent is selected from any one or more of conductive carbon black (super P), acetylene black, carbon nanotubes, and graphene, etc. In the positive material layer, a mass ratio of the positive active material, the conductive agent, and the binder is, for example, (90-98):(1-5):(1-5).

In an embodiment of the disclosure, the positive active material is, for example, LiNi_{0.9}Mn_{0.05}Co_{0.05}O₂, the binder is selected from, for example, polyvinylidene fluoride, and the conductive agent is selected from, for example, conductive carbon black. After the positive active material, conductive agent, and binder are mixed according to a mass ratio of 98:1:1, for example, an organic solvent is added and stirred under the function of a vacuum mixer until the system becomes homogeneous, and a positive slurry is obtained. Herein, the organic solvent is selected from, for example, N-methylpyrrolidone (NMP). The positive slurry is uniformly coated on an aluminum foil and then dried at room temperature before being transferred to an oven for drying, and the positive terminal sheet is obtained through processes such as cold pressing and cutting. In other embodiments, the positive terminal sheet may also be obtained by any other method of forming a positive terminal sheet. In this embodiment, a proportion of nickel content is, for example, 0.9, and compared with a conventional ternary positive active material with a nickel content less than 0.8, the energy density and cycle life of the lithium-ion battery can be further improved.

The negative terminal sheet includes a negative current collector and a negative material layer coated on at least one side surface of the negative current collector. The negative current collector is selected from, for example, one of a copper foil current collector, a composite copper foil current collector, a carbon current collector, a foam copper current collector, or a stainless steel current collector, etc. A thickness of the negative current collector may be 8µm to 15µm. In this embodiment, the negative current collector is selected as, for example, copper foil, and the thickness of the copper foil is, for example, 13µm.

The negative material layer includes a negative active material, a conductive agent, a binder, and a thickening agent, etc. Herein, the negative active material is a compound capable of intercalating-deintercalating lithium ions. In an embodiment of the disclosure, the negative active material includes, for example, at least one of graphite, a silicon oxide material (SiOₓ, 0<x<2), or a silicon-carbon material. When the negative active material includes a silicon oxide material or a silicon-carbon material, its mass ratio with the graphite is, for example, 2:98 to 10:90. The binder is selected from, for example, any one or more of polyvinylidene fluoride, polyethylene oxide, polyamide, polypropylene, polyacrylate, polyvinyl ether, polymethyl methacrylate, polyhexafluoropropylene or styrene-butadiene rubber, etc. The thickening agent is selected from, for example, carboxymethyl cellulose sodium (CMC-Na), etc. The conductive agent is selected from, for example, any one or more of conductive carbon black, acetylene black, ketjen black, carbon nanotubes, and graphene, etc. A mass ratio of the negative active material, conductive agent, binder, and thickening agent in the negative material layer is, for example, (90-96):(1-2):(1-3):(2-5).

In an embodiment of the disclosure, the negative active material is selected from, for example, graphite and a silicon oxide material, and a mass ratio of the silicon oxide material to graphite is, for example, 3.5:96.5. The conductive agent is selected from, for example, conductive carbon black, the thickening agent is selected from, for example, carboxymethyl cellulose sodium, and the binder is selected from, for example, styrene-butadiene rubber. In an embodiment of the disclosure, the negative active material, conductive agent, binder, and thickening agent are mixed according to a mass ratio of 96:1:1:2, added with deionized water, and mixed uniformly under the function of a vacuum mixer, and a negative slurry is obtained. The negative slurry is then coated on a copper foil, dried at room temperature, and then transferred to an oven for drying, and the negative terminal sheet is obtained through processes such as cold pressing and cutting. In other embodiments, the negative terminal sheet may also be obtained by any other method of forming a negative terminal sheet.

In an embodiment of the disclosure, the separator is, for example, a polyethylene (PE film), polypropylene (PP) film, a glass fiber film, or a composite film, etc. A thickness of the separator is, for example, 9µm to 15µm. In an embodiment of the disclosure, the separator selects, for example, 8µm to 10µm polyethylene as a base film, and a 2µm to 4µm nano-alumina layer is coated on the base film to obtain the separator. In an embodiment of the disclosure, the separator uses Enjet separator SCB9-018, for example.

In an embodiment of the disclosure, the lithium-ion battery further includes an electrolyte that is injected and fills the entire internal space of the battery, with the positive terminal sheet, separator, and negative terminal sheet completely immersed in the electrolyte. The electrolyte serves functions such as conducting ions, providing ion channels, and maintaining chemical stability. The various components in the electrolyte may be classified according to their functions and addition amounts into a non-aqueous solvent, a lithium salt, and an additive, etc. The non-aqueous solvent is used to dissolve the lithium salt and the additive. The lithium salt is mainly used to provide lithium ions to form ion channels. In the entire electrochemical system of the battery, the directional movement of lithium ions and electrons generates electricity. The lithium salt has a significant impact on the energy density, power density, wide electrochemical window, cycle life, and safety performance of the lithium battery. The additive, as substances added in small amounts to the electrolyte, are diverse in type and each serves different functions, for example, they can provide different improvement effects on the high- and low-temperature performance, cycling performance, and film-forming performance of the battery.

The disclosure provides a lithium-ion battery electrolyte, including at least a non-aqueous solvent, a lithium salt, and an additive. The additive includes a first additive and a second additive, and the first additive is selected from compounds represented by formula (I): 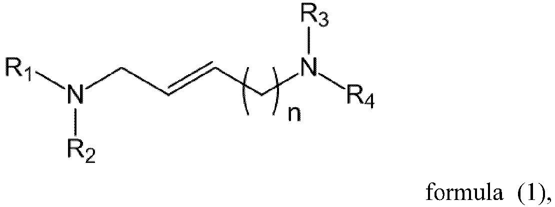 where R₁, R₂, R₃, and R₄ are each independently a substituent having 1 to 3 carbon atoms, 0 to 4 unsaturations, and 0 to 3 heteroatoms, the heteroatoms are selected from at least one of nitrogen, phosphorus, or sulfur, and n is 0 to 2. In an embodiment of the disclosure, R₁, R₂, R₃, and R₄ are each independently a alkyl group, a alkenyl group, a alkynyl group, or an amino group. The second additive is lithium bis(oxyalyl)difluorophosphate (LiODFP) etc. Lithium bis(oxyalyl)difluorophosphate has film-forming ability on both positive and negative terminals, so the quality of the cathode electrolyte inter phase (CEI) and solid electrolyte interface (SEI) is improved, the directive current resistance (DCR) of the lithium-ion battery is effectively reduced, and the low-temperature performance of the battery is improved.

In an embodiment of the disclosure, the first additive may be selected from at least one of 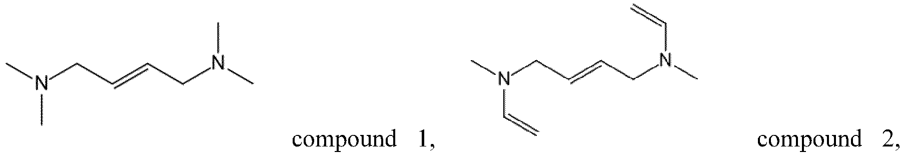 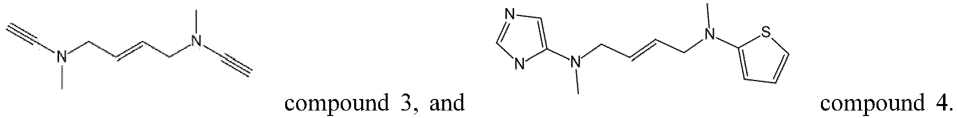 Herein, since the first additive is a Lewis base substance with unsaturated bonds, it can effectively neutralize H⁺ in the electrolyte, so aggravation of electrolyte acidity is avoided, and the dissolution of transition metals and structural collapse in the positive active material are further prevented. When the first additive is used in combination with LiODFP, the two produce a significant synergistic effect. The first additive, with its strong polarity, significantly enhances the solubility of LiODFP in the electrolyte through intermolecular forces. In addition, the unsaturated bonds in the first additive can capture F- produced by P-F bond breaking and forms stable C-F covalent bonds. Further, a chain addition reaction occurs on the positive terminal side, a dense CEI film is formed, the stability of the positive terminal interface is improved, the decomposition and gas generation of the non-aqueous solvent is effectively reduced, and the transition metal ions in the positive terminal are protected from HF corrosion. The combined use of the first additive and lithium bis(oxyalyl)difluorophosphate can fully exploit the advantages of both, so the low-temperature performance of the battery is improved, and high-temperature performance and gas generation performance are balanced.

In an embodiment of the disclosure, a content of the first additive in the electrolyte is, for example, 0.1wt% to 3wt%, and a content of lithium bis(oxyalyl)difluorophosphate as the second additive in the electrolyte is, for example, 0.1wt% to 3wt%. In another embodiment of the disclosure, the content of the first additive in the electrolyte is, for example, 0.1wt% to 0.5wt%, the content of lithium bis(oxyalyl)difluorophosphate in the electrolyte is, for example, 0.5wt% to 1wt%, and a mass ratio of lithium bis(oxyalyl)difluorophosphate to the first additive is, for example, 1.5:1 to 2:1. If the content of the first additive is excessively low, the stability of the formed CEI film is poor, resulting in poor high-temperature storage and gas generation performance. If the content of the first additive is excessively high, the thickness of the CEI film becomes excessive, which is not conducive to the battery capacity performance. If the content of lithium bis(oxyalyl)difluorophosphate is excessively low, the high-temperature storage capacity recovery rate is higher. If the content of lithium bis(oxyalyl)difluorophosphate is excessively high, the low-temperature performance of the lithium-ion battery is improved, but gas generation in the electrolyte is exacerbated, leading to deterioration in high-temperature storage performance and gas generation performance. Therefore, the high-temperature performance and low-temperature performance of the lithium-ion battery is comprehensively improved and gas generation is reduced by controlling the contents of the first additive and lithium bis(oxyalyl)difluorophosphate.

In an embodiment of the disclosure, the additive further includes a third additive, and the third additive is selected from at least one of fluoroethylene carbonate (FEC), 1,3,2-dioxathiolane 2,2-dioxide (DTD), 1,3-propanesultone (PS), or vinylene carbonate (VC), etc. The third additive may be added as a single component or as a mixture of multiple components, and a content of a single third additive in the electrolyte is, for example, 0.1wt% to 2wt%, and a total content of the third additive in the electrolyte is, for example, 1wt% to 10wt%. The first additive, the second additive, and the third additive work synergistically to form a stable SEI film on the negative terminal, so the electrolyte is prevented from being continuously decomposed, and the cycling stability of the lithium-ion battery is improved.

In an embodiment of the disclosure, the lithium salt is selected from at least one of lithium hexafluorophosphate (LiPF₆), lithium bis(fluorosulfonyl)imide (LiFSI), lithium bis(trifluoromethyl)sulfonylimide (LiTFSI), lithium acetate, lithium methanesulfonate, and lithium trifluoromethanesulfonate (CF₃SO₃Li). A content of the lithium salt in the electrolyte is, for example, 12wt% to 16wt%. In the disclosure, the type of lithium salt is not limited, and a single lithium salt or mixed lithium salts may be used. In an embodiment of the disclosure, the lithium salt is selected from, for example, a mixture of lithium hexafluorophosphate and lithium bis(fluorosulfonyl)imide, and a mass ratio of lithium hexafluorophosphate to lithium bis(fluorosulfonyl)imide may be 14:1 to 13:2.

In an embodiment of the disclosure, the non-aqueous solvent is selected from, for example, at least one of carbonate esters, carboxylic acid esters, ethers, or nitriles. The carbonate esters are selected from at least one of ethylene carbonate (EC), propylene carbonate (PC), dimethyl carbonate (DMC), ethyl methyl carbonate (EMC), or diethyl carbonate (DEC). The carboxylic acid esters are selected from at least one of ethyl formate (EF), ethyl acetate (EA), n-propyl acetate (PA), or ethyl propionate (EP). The ethers are selected from at least one of 1,2-dimethoxyethane (DME) or ethylene glycol diethyl ether. The nitriles are selected from at least one of acetonitrile (AN), propionitrile, butyronitrile (BN), or pentanenitrile (VN). A content of the non-aqueous solvent in the electrolyte is 70wt% to 85wt%. In a specific embodiment of the disclosure, the non-aqueous solvent is a mixture of, for example, ethylene carbonate, dimethyl carbonate, and ethyl methyl carbonate.

In an embodiment of the disclosure, when preparing the electrolyte, in a glove box with stable gas such as nitrogen or argon with a content of 99.999%, where an actual oxygen content in the glove box is less than or equal to 0.1ppm and a moisture content is less than or equal to 0.1ppm, after the non-aqueous solvent is mixed uniformly according to the mass ratio, the thoroughly dried lithium salt is added to the non-aqueous solvent, and the additive is added to prepare a non-aqueous electrolyte for the lithium-ion battery. Except for the non-aqueous solvent, the content of the lithium salt and additive is a weight percentage calculated based on a total weight of the electrolyte.

In an embodiment of the disclosure, the positive terminal sheet, the separator, and the negative terminal sheet are placed in sequence, so that the separator is located between the positive terminal sheet and negative terminal sheet to serve as isolation, and a bare cell is obtained through winding or stacking. The bare cell is placed into an outer casing, dried in a vacuum oven, sealed after injecting the electrolyte prepared in the disclosure. After at least going through processes such as standing, formation, and capacity grading, a lithium-ion battery is obtained.

The disclosure is to be explained more specifically through the following embodiments, which should not be understood as limiting. Within the scope consistent with the spirit of the disclosure, appropriate modifications may be made, and all of which fall within the technical scope of the disclosure.

### Example 1

Preparation of an electrolyte: In an argon glove box with the moisture content less than 0.1ppm and oxygen content less than 0.1ppm, ethylene carbonate, dimethyl carbonate, and ethyl methyl carbonate were mixed uniformly according to a mass ratio of 3:5:2 to obtain a mixed solvent, then battery grade lithium hexafluorophosphate, lithium bis(fluorosulfonyl)imide, and compound 1 were added to the mixed solvent, and the electrolyte was obtained after thorough mixing. In the obtained electrolyte, the content of lithium hexafluorophosphate was 14wt%, the content of lithium bis(fluorosulfonyl)imide was 1%, and the content of compound 1 was 0.5wt%.

Preparation of a positive terminal sheet: LiNi_{0.9}Mn_{0.05}Co_{0.05}O₂, polyvinylidene fluoride, and conductive carbon black were mixed according to a mass ratio of 98:1:1, then N-methyl pyrrolidone was added, and the mixture was stirred under the function of a vacuum mixer until the system became homogeneous to obtain a positive slurry. The positive slurry was uniformly coated on aluminum foil, then dried at room temperature before being transferred to an oven for drying, and the positive terminal sheet was obtained after processes such as cold pressing and cutting.

Preparation of a negative terminal sheet: A negative active material, conductive carbon black, sodium carboxymethyl cellulose, and styrene-butadiene rubber were mixed according to a mass ratio of 96:1:1:2, where the negative active material was a mixture of a silicon-oxygen material and graphite, with a mass ratio of silicon-oxygen material to graphite of 3.5:96.5. Deionized water was added and mixed uniformly under the function of a vacuum mixer to obtain a negative slurry. The negative slurry was coated on copper foil, then dried at room temperature before being transferred to an oven for drying, and the negative terminal sheet was obtained after processes such as cold pressing and cutting.

Selection of a separator: An 8µm polyethylene was selected as the base film, with a 3µm nano alumina coating applied on the base film.

Preparation of a battery: The positive terminal sheet, the separator, and the negative terminal sheet were wound in sequence, with the separator positioned between the positive terminal sheet and negative terminal sheet to serve as an isolation function, and a bare cell was obtained. The bare cell was then placed in a cylindrical outer casing, dried in a vacuum oven, injected with the above-prepared electrolyte and sealed, followed by formation process to obtain a lithium-ion battery.

### Example 2

The additive included compound 1 and lithium bis(oxyalyl)difluorophosphate (represented as LiODFP in Table 1). The content of compound 1 was 0.5wt%, and the content of lithium bis(oxyalyl)difluorophosphate was 0.1wt%. The other steps remained the same as those in Example 1.

### Example 3

The additive included compound 1 and lithium bis(oxyalyl)difluorophosphate. The content of compound 1 was 0.5wt%, and the content of lithium bis(oxyalyl)difluorophosphate was 0.5wt%. The other steps remained the same as those in Example 1.

### Example 4

The additive included compound 1 and lithium bis(oxyalyl)difluorophosphate. The content of compound 1 was 0.5wt%, and the content of lithium bis(oxyalyl)difluorophosphate was 1wt%. The other steps remained the same as those in Example 1.

### Example 5

The additive included compound 1 and lithium bis(oxyalyl)difluorophosphate. The content of compound 1 was 0.5wt%, and the content of lithium bis(oxyalyl)difluorophosphate was 3wt%. The other steps remained the same as those in Example 1.

### Example 6

The additive included compound 1 and lithium bis(oxyalyl)difluorophosphate. The content of compound 1 was 0.1wt%, and the content of lithium bis(oxyalyl)difluorophosphate was 0.5wt%. The other steps remained the same as those in Example 1.

### Example 7

The additive included compound 1 and lithium bis(oxyalyl)difluorophosphate. The content of compound 1 was 1wt%, and the content of lithium bis(oxyalyl)difluorophosphate was 0.5wt%. The other steps remained the same as those in Example 1.

### Example 8

The additive included compound 1 and lithium bis(oxyalyl)difluorophosphate. The content of compound 1 was 3wt%, and the content of lithium bis(oxyalyl)difluorophosphate was 0.5wt%. The other steps remained the same as those in Example 1.

### Example 9

The additive included compound 3, and the content of compound 3 is 0.5wt%. The other steps remained the same as those in Example 1.

### Example 10

The additive included compound 3 and lithium bis(oxyalyl)difluorophosphate. The content of compound 3 was 0.5wt%, and the content of lithium bis(oxyalyl)difluorophosphate was 0.5wt%. The other steps remained the same as those in Example 1.

### Example 11

The additive included compound 3 and lithium bis(oxyalyl)difluorophosphate. The content of compound 3 was 0.5wt%, and the content of lithium bis(oxyalyl)difluorophosphate was 1wt%. The other steps remained the same as those in Example 1.

### Comparative Example 1

The electrolyte did not include the first additive nor lithium bis(oxyalyl)difluorophosphate. The other steps remained the same as those in Example 1.

### Comparative Example 2

The additive included lithium bis(oxyalyl)difluorophosphate, and the content of lithium bis(oxyalyl)difluorophosphate was 0.5wt%. The other steps remained the same as those in Example 1.

### Comparative Example 3

The additive included compound 1 and lithium bis(oxyalyl)difluorophosphate. The content of compound 1 was 0.05wt%, and the content of lithium bis(oxyalyl)difluorophosphate was 0.05wt%. The other steps remained the same as those in Example 1.

### Comparative Example 4

The additive included compound 1 and lithium bis(oxyalyl)difluorophosphate. The content of compound 1 was 5wt%, and the content of lithium bis(oxyalyl)difluorophosphate was 5wt%. The other steps remained the same as those in Example 1.

In the disclosure, in Examples 1 to 11 and Comparative Examples 1 to 4, different electrolyte ratios are used to prepare the lithium-ion batteries, and the performance of the lithium-ion batteries is tested, with the test results shown in Table 1.

In an embodiment of the disclosure, in a low-temperature direct current (DC) resistance test, the temperature of a constant temperature box is adjusted to -20°C. After the lithium-ion battery is left in the constant temperature box for 2 hours, it is charged to 4.25V at a constant current of 0.33C, and then charged to 0.05C at a constant voltage of 4.25V. After standing for 30 minutes, it is discharged to 2.5V at a constant current of 0.33C. The last discharge capacity is recorded as C0. After standing for 30 minutes, the battery is discharged at 0.33C to 50% C0, the state of charge (SOC) of the cell is adjusted to 50%, and the battery is left standing for 30 minutes. The static terminal voltage V₁ is recorded, and then the battery is discharged at C0 constant current for 30 seconds, the terminal voltage V₂ and current I are recorded, and DCR=(V₁-V₂)/I is calculated.

In an embodiment of the disclosure, a high-temperature storage capacity recovery rate test is conducted at 25°C, where the lithium-ion battery is charged at 0.33C constant current to 4.25V, then charged at constant voltage until the current is 0.05C, and left to stand for 30 minutes. The above steps are repeated 2 to 3 times, and the discharge capacity C₁ of the last time at 0.33C is recorded. After the fully charged lithium-ion battery is placed in a constant temperature box at 60°C for 30 days (marked as 1M in Table 1 in the following paragraphs), the cell is cooled, and the temperature of the constant temperature box is then adjusted to 25°C. The battery is left to stand for 10 minutes, discharged at 0.33C constant current to 2.5V, and then charged and discharged at 0.33C rate, with the voltage range for charge and discharge being 2.5V to 4.25V. After 2 cycles, the discharge capacity C₂ of the last time is recorded. The capacity recovery rate of the lithium-ion battery after high-temperature storage is calculated according to the following formula: capacity recovery rate (%)=(C₂/C₁)×100%.

In an embodiment of the disclosure, in a gas generation growth rate test, the lithium-ion battery is fully charged and then stored in a 60°C constant temperature box. Its volume is tested every 7 days, and its volume growth rate is recorded and calculated, which is the gas production growth rate.

**Table 1: Performance test results of lithium-ion batteries in Examples 1 to 11 and Comparative Examples 1 to 4**

| Group | First Additive | - | Gas generation of 1M storage at 60°C (%) | Resistance DCR (mOhm) at - 20°C | Capacity recovery rate of 1M storage at 60°C |
|---|---|---|---|---|---|
| Example 1 | 0.5wt% of compound 1 | 0.1wt% | 4.85% | 608.7 | 87.83% |
| Example 2 | 0.5wt% of compound 1 | 0.5wt% | 4.56% | 591.3 | 91.38% |
| Example 3 | 0.5wt% of compound 1 | 1wt% | 4.32% | 580.5 | 93.56% |
| Example 4 | 0.5wt% of compound 1 | 3wt% | 4.78% | 581.8 | 89.78% |
| Example 5 | 0.5wt% of compound 1 | 0.5wt% | 5.37% | 594.5 | 87.53% |
| Example 6 | 0.1wt% of compound 1 | 0.5wt% | *5.05%* | 590.6 | 90.15% |
| Example 7 | 1wt% of compound 1 | 0.5wt% | 5.38% | 593.2 | 90.86% |
| Example 8 | 1wt% of compound 3 | - | 6.92% | 610.7 | 88.32% |
| Example 9 | 0.5wt% of compound 3 | 0.5wt% | 4.96% | 613.4 | 86.53% |
| Example 10 | 0.5wt% of compound 3 | 1wt% | 4.67% | 588.6 | 91.20% |
| Example 11 | 0.5wt% of compound 3 | - | 5.12% | 595.3 | 89.03% |
| Comparative Example 1 | - | 0.5wt% | 34.5% | 654.5 | 70.53% |
| Comparative Example 2 | - | 0.05wt% | 22.5% | 612.3 | 78.56% |
| Comparative Example 3 | 1wt% of compound 0.05 | 5wt% | 19.06% | 615.4 | 80.67% |
| Comparative Example 4 | 1wt% of compound 5 | - | 13.84% | 745.9 | 82.84% |

Referring to Table 1, when Examples 1 to 11 are compared, it is known that when only the first additive is added, it can effectively neutralize H⁺ in the electrolyte, so the intensification of electrolyte acidity is avoided, and gas generation is reduced. However, the low-temperature resistance is higher and the capacity recovery rate after high-temperature storage is lower, indicating that when only the first additive is added, the gas generation problem is improved, but the improvement in high- and low-temperature performance of the lithium-ion battery is not significant. When Examples 1 to 5 are compared, it is known that when the first additive and lithium bis(oxyalyl)difluorophosphate are used together, with the increase of the lithium bis(oxyalyl)difluorophosphate content, the high-temperature gas generation and low-temperature resistance show a trend of first decreasing and then increasing, and the high-temperature storage capacity recovery rate shows a trend of first increasing and then decreasing. Therefore, the content of lithium bis(oxyalyl)difluorophosphate shall be controlled at 0.1wt% to 3wt%, with the optimal content being 0.5wt% to 1wt%, for example.

With reference to Table 1, when Examples 3 and 6 to 8 are compared, it is known that when the first additive and lithium bis(oxyalyl)difluorophosphate are used together, with the increase of the first additive content, the high-temperature gas generation and low-temperature resistance show a trend of first decreasing and then increasing, and the high-temperature storage capacity recovery rate shows a trend of first increasing and then decreasing. Therefore, the optimal content of the first additive is 0.1wt% to 0.5wt%, for example. This is because the unsaturated bonds in the structure of the first additive can capture the F- generated by the breaking of the P-F bond, C-F covalent bonds are formed, and further chain addition reactions occur on the positive terminal side, so the stability of the positive terminal interface is improved, and the high-temperature performance is enhanced. However, excessive use of the first additive may cause the CEI film to be excessively thick during high-temperature storage, which is not conducive to the full utilization of the capacity of the lithium-ion battery.

Referring to Table 1, when Examples 1, 3 to 4, and 9 to 11 are compared, it is known that when different structures of the first additive are selected, when used in combination with lithium bis(oxyalyl)difluorophosphate, with the content controlled within a reasonable range, the low-temperature effect of the lithium-ion battery can also be improved, while high-temperature storage and gas generation performance are balanced. When the content of the first additive with different structures changes, the trend of change is the same. Therefore, the first additive with different specific structures can be used together with lithium bis(oxyalyl)difluorophosphate to improve the performance of the lithium-ion battery.

Referring to Table 1, when Examples 1 to 11 and Comparative Example 1 are compared, it is known that when the electrolyte does not contain the first additive nor lithium bis(oxyalyl)difluorophosphate, the high-temperature gas generation, low-temperature resistance, and high-temperature storage capacity recovery rate of the lithium-ion battery severely deteriorate. When Examples 1 to 11 and Comparative Example 2 are compared, it is known that when the first additive is not added, on one hand, it cannot assist lithium bis(oxyalyl)difluorophosphate to better exert its low-temperature function. On the other hand, the gas generation and high-temperature performance of the lithium-ion battery also decrease significantly. When Examples 1 to 11 and Comparative Examples 3 to 4 are compared, it is known that when the contents of the first additive and lithium bis(oxyalyl)difluorophosphate are both less than 0.1wt% or both greater than 3wt%, it may also cause deterioration of the lithium-ion battery performance. Therefore, the contents of the first additive and lithium bis(oxyalyl)difluorophosphate shall be controlled within an appropriate range to improve the comprehensive performance of the lithium-ion battery.

The disclosure further provides an electrochemical apparatus including at least one of the above lithium-ion battery, and the lithium-ion battery is used to provide electrical energy. Herein, the electrochemical apparatus may be a vehicle, a mobile phone, a portable device, a notebook computer, a ship, a spacecraft, an electric toy, an electric tool, etc. In an embodiment of the disclosure, the vehicle may be, for example, a new energy vehicle, and the new energy vehicle may be a pure electric vehicle, a hybrid vehicle, or a range-extended vehicle, etc. The spacecraft includes an airplane, a rocket, a space shuttle, a spaceship, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, including, for example, an electric drill, an electric grinder, an electric wrench, an electric screwdriver, an electric hammer, an impact drill, a concrete vibrator, an electric planer, etc. The electrochemical apparatus includes the above lithium-ion battery, and the electrochemical apparatus therefore includes the advantages of the above lithium-ion battery. Description thereof is not repeated herein.

In view of the foregoing, the disclosure provides a lithium-ion battery electrolyte, a lithium-ion battery, and an electrochemical apparatus. Through the combined use of the first additive and lithium bis(oxyalyl)difluorophosphate, the solubility of lithium bis(oxyalyl)difluorophosphate is improved through intermolecular interactions. The unsaturated bonds in the first additive can capture F- produced by P-F bond breaking, C-F covalent bonds are formed, and further chain addition reactions occur on the positive terminal side, so the stability of the positive terminal interface is improved. The H⁺ in the electrolyte is neutralized, the increase in electrolyte acidity is avoided, and the decomposition and gas generation of the non-aqueous solvent is reduced. Transition metal dissolution and structural collapse in the positive terminal are further prevented, and transition metal ions in the positive terminal are protected from HF corrosion. The combined use of the first additive and lithium bis(oxyalyl)difluorophosphate can fully exploit the advantages of both, so the quality of the cathode electrolyte inter phase and solid electrolyte interface is enhanced, the low-temperature resistance of the lithium-ion battery is effectively reduced, the low-temperature performance of the battery is improved, and high-temperature performance and gas generation performance are balanced.

The above description is only preferred embodiments of the disclosure and an illustration of the applied technical principle. A person having ordinary skill in the art shall understand that the scope involved in the disclosure is not limited to the technical solutions formed by specific combinations of the above technical features and shall also cover other technical solutions formed by any combination of the above technical features or their equivalent features without departing from the concept of the disclosure, for example, technical solutions formed by (but not limited to) replacing the above features with technical features disclosed in the disclosure with similar functions.

Except for the technical features in the specification, the rest of the technical features are known technologies by a person having ordinary skill in the art. In order to highlight the innovative features of the disclosure, the rest of the technical features will not be repeated herein.

## Claims

1. A lithium-ion battery electrolyte, at least comprising the following components:
a non-aqueous solvent;
a lithium salt; and
an additive comprising a first additive and a second additive, wherein the first additive is selected from compounds represented by formula (I), the second additive is lithium bis(oxyalyl)difluorophosphate, and 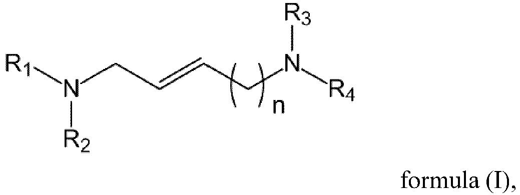
wherein R₁, R₂, R₃, and R₄ are each independently a substituent having 1 to 3 carbon atoms, 0 to 4 unsaturations, and 0 to 3 heteroatoms, the heteroatoms are selected from at least one of nitrogen, phosphorus, or sulfur, and n is 0 to 2.

2. The lithium-ion battery electrolyte according to claim 1, wherein R₁, R₂, R₃, and R₄ are each independently a alkyl group, a alkenyl group, a alkynyl group, or an amino group.

3. The lithium-ion battery electrolyte according to claim 1, wherein a content of the first additive in the electrolyte is 0.1wt% to 3wt%, and a content of the second additive in the electrolyte is 0.1wt% to 3wt%.

4. The lithium-ion battery electrolyte according to claim 1, wherein a content of the first additive in the electrolyte is 0.1wt% to 0.5wt%, a content of the second additive in the electrolyte is 0.5wt% to 1wt%, and a mass ratio of the second additive to the first additive is 1.5:1 to 2:1.

5. The lithium-ion battery electrolyte according to claim 1, wherein the first additive is selected from at least one of the following compounds:

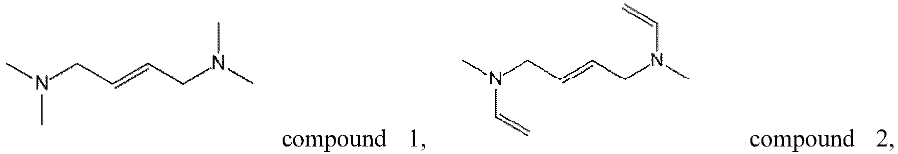

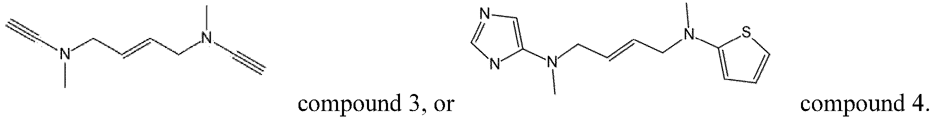

6. The lithium-ion battery electrolyte according to claim 1, wherein the non-aqueous solvent is selected from at least one of carbonate esters, carboxylic acid esters, ethers, or nitriles, the carbonate esters are selected from at least one of ethylene carbonate, propylene carbonate, dimethyl carbonate, ethyl methyl carbonate, or diethyl carbonate, the carboxylic acid esters are selected from at least one of ethyl formate, ethyl acetate, n-propyl acetate, or ethyl propionate, the ethers are selected from at least one of 1,2-dimethoxyethane or ethylene glycol diethyl ether, the nitriles are selected from at least one of acetonitrile, propionitrile, butyronitrile, or pentanenitrile, and a content of the non-aqueous solvent in the electrolyte is 70wt% to 85wt%.

7. The lithium-ion battery electrolyte according to claim 1, wherein the lithium salt is selected from at least one of lithium hexafluorophosphate, lithium bis(fluorosulfonyl)imide, lithium bis(trifluoromethyl)sulfonylimide, lithium acetate, lithium methanesulfonate, and lithium trifluoromethanesulfonate, and a content of the lithium salt in the electrolyte is 12wt% to 16wt%.

8. A lithium-ion battery, at least comprising:
a positive terminal sheet;
a negative terminal sheet; and
an electrolyte selected from the lithium-ion battery electrolyte according to any one of claims 1 to 7.

9. The lithium-ion battery according to claim 8, wherein a positive active material on the positive terminal sheet comprises Liₓ[Ni_{y}Co_{z}MnₜM_{(1-y-z-t})]O_{2-δ}, wherein M is at least one of Cr, Zr, Ca, Mg, Cu, Ti, Al, Mo, W, or Zn, 0.9<x<1.1, 0.65≤y<1.0, 0≤z<0.5, 0≤t<0.5, 0≤δ≤0.1, and a negative active material on the negative terminal sheet comprises at least one of graphite, a silicon oxide material, or a silicon carbon material.

10. An electrochemical apparatus, comprising the lithium-ion battery according to claim 8 or 9.
